# EUROPEAN PATENT SPECIFICATION

(11) **EP 3 765 247 B1**
(45) Date of publication and mention of the grant of the patent: **30.04.2025**
(21) Application number: 19711427.5
(22) Date of filing: 20.02.2019
(51) Int. Cl.: B25J 19/02, B25J 9/16

(54) **INDUSTRIAL ROBOT WITH RADAR FOR COLLISION PREVENTION**
INDUSTRIEROBOTER MIT RADAR ZUR KOLLISIONSVERHINDERUNG
ROBOT INDUSTRIEL DOTÉ D'UN RADAR DE PRÉVENTION DES COLLISIONS

(30) Priority: 12.03.2018 IT 201800003462
(43) Date of publication of application: 20.01.2021
(73) Proprietor: Aria Sensing S.r.l., 25086 Rezzato (IT)
(72) Inventor: ALESSIO, Cacciatori, 25080 Serle (BS) (IT); ANDREA, Mario, 25080 Serle (BS) (IT)
(74) Representative: Trentin, Michele
(86) International application number: PCT/IB2019/051378
(87) International publication number: WO 2019/175691

(56) References cited:
- WO-A1-2006/037137
- WO-A1-2014/104896
- WO-A1-2017/137558
- WO-A1-2017/189502
- WO-A1-2017/197170
- CN-A- 106 826 855
- CN-A- 107 234 634
- DE-A1- 102007 045 381
- FR-A1- 2 606 162
- US-A1- 2005 246 064
- US-A1- 2015 032 252
- US-A1- 2017 266 808
- US-A1- 2017 315 536
- US-B2- 9 296 106

## Description

### Field of application

The present invention is generally applicable to the automation sector and refers to a robot for automated machining operations.

More in detail, the present invention refers to the automated guide of a robot which has to perform programmed machining operations in a space that is typically, but not necessarily, delimited.

### Background Art

As known, there is a tendency to transfer many machining operations from human operators to machines, also called robots, which perform such operations with automated methods.

This allows not only to speed up these machining operations and reduce their costs, but also to reduce the likelihood of errors and to eliminate the possibility of injury for the operators.

However, such robots must be perfectly programmed in their movements since not only an incorrect positioning would not allow to perform the machining to which they are dedicated, but also because they are substantially "blind", i.e. they are not able to detect the obstacles that the surrounding environment presents.

This is not only an operational problem, but also a risk. If on the one hand, in fact, a perfect programming allows to avoid accidental impacts with walls or other type of fixed obstacle, this does not prevent impacts with occasional obstacles such as objects improperly deposited in their movement path or even people who move around such robots. Despite all the warning notices and safety measures arranged around them, the risk of occasional incidents is very high and typically due to human error.

It should also be pointed out that programming itself is subject to error and, in any case, is particularly expensive especially because of the precision it requires.

Therefore, robots which use optical devices to detect obstacles in their movements are known, but they are typically two-dimensional detecting devices that serve as "navigators" for the robot.

In this sense, they are subject to a series of drawbacks.

First, they do not detect obstacles in the three dimensions. Consequently, the obstacles cannot be assessed correctly because the possibility of collision must be assessed on the basis of the effective dimension of the obstacle, and not only on its frontal projection.

Second, the optical detecting devices are subject to environmental disturbances such as smoke, fog or others which irremediably compromise the detections.

Moreover, such devices need to perform the detection only before their use, in the rest state, since they need a fixed reference. This also prevents the detection of occasional obstacles during the operating step.

In addition thereto, documents CN 107 234 634 A, US 9 296 106 B2, WO 2017/197170 A1, DE 102007045381 A1 and WO 2017/189502 A1 are known which disclose systems and/or methods for collision prevention in robot manufacturing environments but which, nevertheless, do not solve the drawbacks described above.

### Presentation of the invention

The object of the present invention is to overcome at least partially the drawbacks outlined above by providing a robot that is free to perform the machining operations by limiting if not eliminating the risk of collisions with obstacles in the surrounding environment.

In particular, it is an object of the present patent to provide a robot that is capable of detecting both fixed and occasional obstacles without having to reprogram it. In particular, the robot must be able to perform a continuous environmental detection in order to guarantee complete safety and optimized performance when the obstacle conditions change.

Another object is that the robot identifies any type of obstacle in any direction in which this obstacle is located.

A further object is that the robot may be able to detect obstacles in any environmental condition it is located.

Said objects, as well as others which will become more apparent below, are achieved by a robot for performing automated machining operations according to claims 1 to 7 below.

In particular, the robot comprises a support structure typically constituted by the body of the robot itself. It is then connected to a mechanical arm provided, at the free end, with a tool for performing the machining operations.

According to an aspect of the invention, a radar device is coupled to the mechanical arm for the 3D detection of obstacles.

Advantageously, therefore, the detection of obstacles allows to slow down or stop the robot before any impact. In particular, the 3D detection of obstacles advantageously allows to correctly assess the dimension of the same and correctly determine the risk of impacts.

It is also possible, still advantageously, to set and change the paths of the mechanical arm to avoid such obstacles.

Still advantageously, the radar detection allows to correctly detect obstacles even in presence of disturbed environmental conditions due to the presence of smoke, fog or other.

Still advantageously, the use of the radar device allows to detect even occasional obstacles, thereby avoiding collision risks. This is particularly advantageous as it allows operators to move safely in the surrounding environment without the risk of dangerous contacts with the robot.

According to another aspect of the invention, the robot also comprises a memory circuit operatively connected to the radar device for storing a 3D detection produced by the device itself.

In this sense, advantageously, it is possible at least initially, if not at regular intervals, to save a complete scan of the surrounding environment so as to use the radar device only for detecting occasional obstacles. This allows the robot, however, to calculate optimal paths for the machining operations based on updated detections in order to optimize the productivity thereof.

### Brief description of the drawings

Further features and advantages of the invention will be more apparent in light of the detailed description of a preferred but not exclusive embodiment of a robot for performing automated machining operations according to the invention, illustrated by way of non-limiting example with the aid of the accompanying drawings wherein:
- FIG. 1 represents a perspective view of a robot according to the invention;
- FIG. 2 represents a detail of the robot of FIG. 1.

### Detailed description of some preferred exemplary embodiments

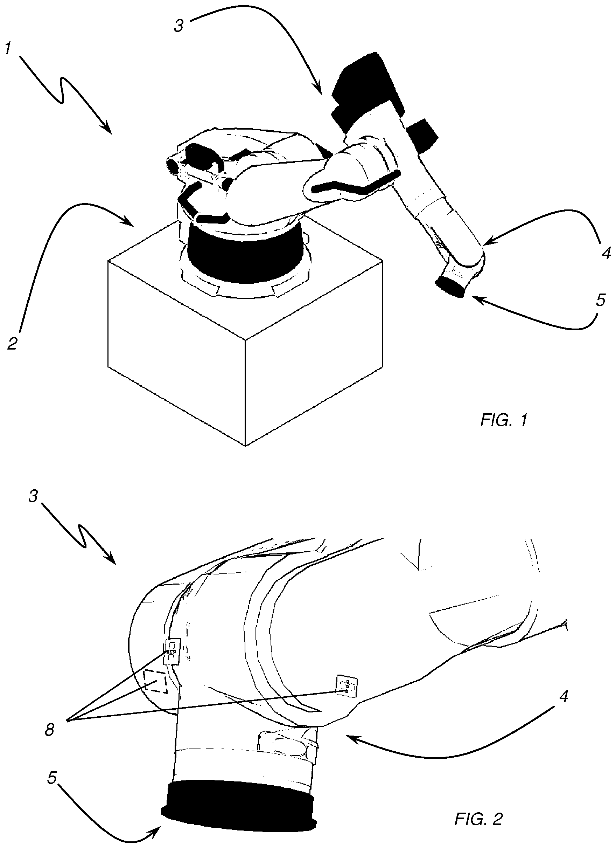

With reference to the above-mentioned figures, and in particular to fig. 1, described herein is a robot **1** according to the invention.

In particular, the robot **1** is typically designated for industrial machining operations inside closed spaces, but this should not be considered as limiting for different uses such as machining operations in open spaces.

In this sense, the robot **1** comprises a support structure **2** which, although in the figures is constituted by a static structure, according to some variant embodiments comprises movement means to allow the whole robot to move independently both in closed spaces and in open spaces.

To this support structure **2** a mechanical arm **3** is operatively coupled, provided with a tool **5** at the free end **4** for performing the machining operations to which the robot **1** is designated.

It is evident that both the number of mechanical arms and the number and type of tools are not limiting characteristics for the invention. Also, the shape of the mechanical arm can be any, as well as the number of joints that characterize it. In the same way, the application point of the tools may also be any.

According to an aspect of the invention, on the mechanical arm **3** are arranged some radar devices **8** visible in fig. 2. Their function is to perform 3D detection of obstacles and delimitations present in the area wherein they operate.

Advantageously, such detection allows the robot **1** to have a precise three-dimensional map of the manoeuvring space available, thus avoiding any risk of collision with static obstacles.

All this is obtained, advantageously, without the need for precise programming of the robot **1,** thereby limiting both the costs of operation and the possibility of human errors in programming.

Moreover, it is observed that the 3D detection of the obstacles advantageously allows to correctly assess the dimensions of the same and correctly determine the risk of impacts as well as to provide for correct movement of the robot **1** itself or of its mechanical arm **3.** More in detail, in the case of a 2D survey, as in the prior art, any obstacle becomes unsurmountable. With a 3D detection, on the other hand, there is a correct identification of the dimensions of the obstacle and it is therefore possible to move the robot **1** even in the direction of the obstacle, optimizing the machining movements.

Moreover, still advantageously, the detection by means of radar devices **8** allows to correctly detect obstacles even in presence of disturbed environmental conditions due to the presence of smoke, fog or other.

Still advantageously, the use of the radar devices **8** allows to detect also occasional obstacles both static (for example objects momentarily positioned in the machining area) and in motion (for example people or other robots), thereby avoiding unexpected collision risks. This is particularly advantageous as it allows operators to move safely in the surrounding environment without the risk of dangerous contacts with the robot **1.**

It should be noted that the detection typically occurs by moving the radar devices **8,** therefore the scanning step can be continuous during all the machining operations by means of the mechanical arm **3.**

It is also possible, still advantageously, to provide not only the stop or slowing of the movement of the robot **1** in case of occasional obstacles at least until they disappearance, but also changing of the paths of the robot **1** or of its mechanical arm **3** to continue the machining operations even in the presence of such occasional obstacles.

Typically, the 3D detection of the machining area takes place by means of the SAR technique. In this sense, acquisitions take place at different points along a scan direction. They are then combined according to the SAR technique with the result that a radar image is obtained as a point cloud. It constitutes a high-resolution 3D image. However, even this example of embodiment of the invention should not be considered as limiting.

In the figures it is observed that the radar devices **8** are arranged near the free end **4** of the mechanical arm **3** and therefore close to the tool **5,** but also this aspect must not be considered as limiting for the invention, the arrangement of the radar devices being of any type. In particular, in the case of a robot with a support structure subject to movement, it is possible to provide for the use of radar devices not only on the mechanical arms, but also on the same support structure, although the measurements carried out may be redundant.

Also, the number of radar devices may be of any type without any limitation for the invention. In the figures, it is observed that they are three pairs for a total of six. Moreover, each pair is arranged according to a direction substantially orthogonal to the others in order to have detentions on the three Cartesian axes. This configuration, however, is to be considered only a possible non-limiting example of performing the invention, the radar devices being able to be in any number whatsoever.

It should also be noted that, according to some embodiments not shown in the figures, radar devices are used with multiple transmitting antennas and/or multiple receiving antennas arranged in directions that are incident to each other and/or according to opposite ways so as to simulate multiple radar devices with a single unit.

According to another aspect of the invention, the radar devices 8 are radars of the UWB type. This allows a particularly precise detection of the position and the of obstacle dimension. However, even this detail must be considered as non-limiting for the invention, the type of radar being of any type. In particular, the radar devices **8** are typically of the type operating with electromagnetic waves in the spectrum of radio waves and/or microwaves, but also this aspect must not be considered as limiting for the invention.

Operatively, therefore, after the activation of the robot **1** there is the repetition at regular intervals of a scanning step, by means of the radar devices **8,** of the surrounding area for the reconstruction of a 3D map of that area and/or of the obstacles present within.

Typically, the scanning step occurs by moving the radar devices **8** because many obstacles are often static, and this makes their detection difficult and imprecise even if the radar devices **8** are still.

There is therefore a control step of the speed and direction of movement of the robot **1** and its mechanical arm **3** in the three dimensions to avoid collisions with the detected obstacles or with the limits of the machining area.

It is evident that the duration of such regular intervals may be any between intervals so little as to simulate a substantially continuous detection and particularly long intervals in case of conservative environments where the presence of occasional obstacles, perhaps in motion, can substantially be excluded.

According to a further aspect of the invention, the robot **1** also comprises a memory circuit, not represented in the figures, operatively connected to the radar devices **8** for storing at least one 3D detection. In this sense, therefore, by providing one or more steps of storing the scan of the surrounding area it is possible to provide a map of the area that can be updated so that the robot **1** can calculate optimal machining paths to be repeated until occasional obstacles appear in its action range.

Still advantageously, in case of periodic repetition of this storing step, the map and the recalculation of the machining paths is advantageously updated if there are obstacles which from being occasional become static and fixed in the machining area.

In light of the foregoing, it is understood that the robot of the invention achieves the intended purposes.

In particular,it performs the machining operations safely, limiting if not eliminating the risk, of collisions with obstacles in the surrounding environment.

Ultimately, it is able to detect both fixed and occasional obstacles without having to initially be programmed and reprogrammed during machining operations.

It also allows to detect any type of obstacle in any direction that obstacle is located and in any environmental condition the robot is working.

The invention might be subject to many changes and variants, which are all included in the appended claims. Moreover, all the details may furthermore be replaced by other technically equivalent elements, and the materials may be different depending on the needs, without departing from the protection scope of the invention defined by the appended claims.

## Claims

1. Robot for performing automated machining operations comprising:
- at least one support structure (**2**);
- at least one mechanical arm (**3**) operatively connected to said support structure (**2**) and provided, at the free end (**4**), with a tool (**5**) for performing machining operations,
wherein at least on said mechanical arm (**3**) at least one radar device (**8**) is arranged, **characterized in that** said radar device is arranged for the 3D detection of obstacles also while performing the machining operations.

2. Robot according to claim 1, **characterized in** comprising at least two radar devices (**8**) arranged in directions incident to each other.

3. Robot according to claim 1, **characterized in that** said radar device comprises two or more pairs of transmitting and receiving antennas, each pair arranged according to an incident direction the directions identified by the other pairs.

4. Robot according to one or more of the preceding claims, **characterized in that** said radar device (**8**) emits electromagnetic waves in the spectrum of radio waves and/or microwaves.

5. Robot according to one or more of the preceding claims, **characterized in that** said radar device (**8**) is an UWB radar.

6. Robot according to one or more of the preceding claims, **characterized in that** said radar device (**8**) is arranged at least close to said tool (**5**).

7. Robot according to one or more of the preceding claims, **characterized in** comprising a memory circuit operatively connected at least to said radar device (**8**) for storing at least one 3D detection produced by said radar device (**8**).

8. Method of controlling the movement of a robot (**1**) according to one or more of the previous claims provided with at least one mechanical arm (**3**) for performing automated machining operations comprising:
- at least one scanning step, by at least one radar device (**8**), of the area surrounding said robot (**1**) for the 3D reconstruction of the obstacles therein;
- at least one controlling step of the speed and direction of movement of at least said mechanical arm (**3**) in the three dimensions to avoid collisions with the detected obstacles.

9. Method according to claim 8, wherein said scanning step is repeated periodically to detect new obstacles and/or moving obstacles in the surrounding area.

10. Method according to claim 8 or 9, wherein said scanning step is carried out by moving said radar device (**8**).

## Patentansprüche

1. Roboter zum Durchführen von automatisierten maschineller Bearbeitungsoperationen, der Folgendes umfasst:
- mindestens eine Stützstruktur (2),
- mindestens einen mechanischen Arm (3), der wirksam mit der Stützstruktur (2) verbunden und, an dem freien Ende (4), mit einem Werkzeug (5) zum Durchführen von maschinellen Bearbeitungsoperationen versehen ist,
wobei zumindest an dem mechanischen Arm (3) mindestens eine Radarvorrichtung (8) angeordnet ist, **dadurch gekennzeichnet, dass** die Radarvorrichtung für die 3D-Erkennung von Hindernissen ebenfalls während eines Durchführens der maschinellen Bearbeitungsoperationen angeordnet ist.

2. Roboter nach Anspruch 1, **dadurch gekennzeichnet, dass** er mindestens zwei Radarvorrichtungen (8) umfasst, die in Richtungen angeordnet sind, die inzident miteinander sind.

3. Roboter nach Anspruch 1, **dadurch gekennzeichnet, dass** die Radarvorrichtung zwei oder mehr Paare von Sende- und Empfangsantennen umfasst, wobei jedes Paar entsprechend einer Richtung angeordnet ist, die mit den Richtungen inzident ist, die durch die anderen Paare definiert werden.

4. Roboter nach einem oder mehreren der vorhergehenden Ansprüche, **dadurch gekennzeichnet, dass** die Radarvorrichtung (8) elektromagnetische Wellen in dem Spektrum von Funkwellen und/oder Mikrowellen ausstrahlt.

5. Roboter nach einem oder mehreren der vorhergehenden Ansprüche, **dadurch gekennzeichnet, dass** die Radarvorrichtung (8) ein UWB-Radar ist.

6. Roboter nach einem oder mehreren der vorhergehenden Ansprüche, **dadurch gekennzeichnet, dass** die Radarvorrichtung (8) zumindest nahe zu dem Werkzeug (5) angeordnet ist.

7. Roboter nach einem oder mehreren der vorhergehenden Ansprüche, **dadurch gekennzeichnet, dass** er einen Speicherschaltkreis umfasst, der zumindest mit der Radarvorrichtung (8) verbunden ist, zum Speichern mindestens eine 3D-Erkennung, die durch die Radarvorrichtung (8) erzeugt wird.

8. Verfahren zum Steuern der Bewegung eines Roboters (1) nach einem oder mehreren der vorhergehenden Ansprüche, der mit mindestens einem mechanischen Arm (3) versehen ist, zum Durchführen von automatisierten maschinellen Bearbeitungsoperationen, das Folgendes umfasst:
- mindestens einen Abtastungsschritt, durch mindestens eine Radarvorrichtung (8), des Bereichs, der den Roboter (1) umgibt, für die 3D-Rekonstruktion der Hindernisse in demselben,
- mindestens einen Steuerungsschritt der Geschwindigkeit und der Richtung einer Bewegung mindestens eines mechanischen Arms (3) in den drei Dimensionen, um Zusammenstöße mit den erkannten Hindernissen zu vermeiden.

9. Verfahren nach Anspruch 8, wobei der Abtastungsschritt periodisch wiederholt wird, um neue Hindernisse und/oder sich bewegende Hindernisse in dem umgebenden Bereich zu erkennen.

10. Verfahren nach Anspruch 8 oder 9, wobei der Abtastungsschritt durch Bewegen der Radarvorrichtung (8) ausgeführt wird.

## Revendications

1. Robot pour la réalisation d'opérations d'usinage automatisées comprenant :
- au moins une structure de support (2) ;
- au moins un bras mécanique (3) relié de manière opérationnelle à ladite structure de support (2) et pourvu, à l'extrémité libre (4), d'un outil (5) pour effectuer des opérations d'usinage,
dans lequel au moins un dispositif radar (8) est disposé sur ledit bras mécanique (3), **caractérisé en ce que** ledit dispositif radar est disposé pour la détection 3D d'obstacles également pendant l'exécution des opérations d'usinage.

2. Robot selon la revendication 1, **caractérisé en ce qu'**il comprend au moins deux dispositifs radar (8) disposés dans des directions incidentes l'une par rapport à l'autre.

3. Robot selon la revendication 1, **caractérisé en ce que** ledit dispositif radar comprend deux ou plusieurs paires d'antennes émettrices et réceptrices, chaque paire étant disposée selon une direction incidente par rapport aux directions identifiées par les autres paires.

4. Robot selon une ou plusieurs des revendications précédentes, **caractérisé en ce que** ledit dispositif radar (8) émet des ondes électromagnétiques dans le spectre des ondes radio et/ou des micro-ondes.

5. Robot selon l'une ou plusieurs des revendications précédentes, **caractérisé en ce que** ledit dispositif radar (8) est un radar UWB.

6. Robot selon l'une ou plusieurs des revendications précédentes, **caractérisé en ce que** ledit dispositif radar (8) est disposé au moins à proximité dudit outil (5).

7. Robot selon l'une ou plusieurs des revendications précédentes, **caractérisé en ce qu'**il comprend un circuit de mémoire raccordé de manière opérationnelle au moins audit dispositif radar (**8**) pour stocker au moins une détection 3D produite par ledit dispositif radar (**8**).

8. Procédé de commande du déplacement d'un robot (1) selon une ou plusieurs des revendications précédentes pourvu d'au moins un bras mécanique (3) pour la réalisation d'opérations d'usinage automatisées comprenant :
- au moins une étape de balayage, par au moins un dispositif radar (8), de la zone entourant ledit robot (1) pour la reconstruction 3D des obstacles qui s'y trouvent ;
- au moins une étape de commande de la vitesse et de la direction de mouvement d'au moins ledit bras mécanique (3) dans les trois dimensions afin d'éviter les collisions avec les obstacles détectés.

9. Procédé selon la revendication 8, dans lequel ladite étape de balayage est répétée périodiquement pour détecter de nouveaux obstacles et/ou des obstacles en mouvement dans la zone environnante.

10. Procédé selon la revendication 8 ou 9, dans lequel l'étape de balayage est effectuée en déplaçant le dispositif radar (**8**).
